# EUROPÄISCHE PATENTANMELDUNG

(11) **EP 1 742 343 A1**
(43) Veröffentlichungstag der Anmeldung: **10.01.2007**
(21) Anmeldenummer: 05405430.9
(22) Anmeldetag: 08.07.2005
(51) Int. Cl.: H02M 7/48

(54) **Modulationsverfahren**

(71) Anmelder: ABB Schweiz AG, 5400 Baden (CH)
(72) Erfinder: Steinke, Jürgen, 79774 Albbruck (DE); Herold, Simon, 8910 Affoltern am Albis (CH)
(74) Vertreter: ABB Patent Attorneys

(57) **Zusammenfassung**

In einem ersten Verfahrensschritt wird das zu erzeugende Ausgangsspannungsniveau ermittelt. In einem zweiten Schritt, wird aus dem ermittelten Ausgangsspannungsniveau aus verschiedenen, redundanten Schaltzuständen derjenige ausgewählt, welcher die Spannungen der Zellkondensatoren in die richtige Richtung am günstigsten beeinflusst, also in der Regel die bestehende Abweichung der Spannungen der Zellkondensatoren verkleinert.

Auf diese Weise können die Spannungen der Zellkondensatoren fortwährend korrigiert werden und es ergibt sich eine optimierte Balancierung der einzelnen Spannungen. Jede erfasste Abweichung wird mit dem nächsten Schaltvorgang korrigiert, und zwar solange, bis die entsprechende Abweichung kleiner geworden ist als eine andere Abweichung.

## Beschreibung

### Technisches Gebiet

Die Erfindung bezieht sich auf das Gebiet der Leistungselektronik. Sie betrifft ein Verfahren zur Modulation einer Phase eines Gleichspannungswechselrichters mit mehreren Zellen mit jeweils einer Gleichspannungsquelle, beispielsweise eines Stacked Multicell Converter.

### Stand der Technik

Zur Umformung elektrischer Energie sind statische Frequenzumrichter weit verbreitet. Beim Gleichspannungswechselrichter, welcher zu den statischen Frequenzumrichtern gehört, wird mindestens eine innere, durch einen Kondensator gebildete Gleichspannungsquelle mit Hilfe von Halbleiterschaltern mit positivem oder negativem Vorzeichen an die Ausgangsklemmen geschaltet und so eine Wechselspannung erzeugt. Im Gegensatz zu einem elektrischen Wechselspannungsnetz, in welchem die Spannungen einen sinusförmigen Zeitverlauf aufweisen und somit im Verlauf einer Periode jede Spannung alle kontinuierlichen Werte zwischen einem Maximum und einem Minimum annehmen werden, sind die von einem Gleichspannungswechselrichter erzeugten Wechselspannungen diskret, so dass die Wechselspannung stufenförmig verlaufen und innerhalb einer Periode nur eine bestimmte Anzahl an Werten annehmen wird.

Die vom Gleichspannungswechselrichter erzeugte Wechselspannung kann qualitativ verbessert werden, indem die Anzahl der diskreten Werte, welche sie während einer Periode annehmen kann, erhöht. Dies geschieht durch Erhöhen der Anzahl der inneren Gleichspannungsquellen, welche durch Kondensatoren, auch fliegende Kondensatoren genannt, gebildet werden, sowie der Anzahl der Halbleiterschalter, mit welchen die einzelnen Gleichspannungsquellen mit positivem oder negativem Vorzeichen an die Ausgangsklemmen geschaltet werden können. Die erzeugte Wechselspannung wird somit durch die Summe einer wechselnden Untermenge aller Kondensatorspannungen gebildet, wobei jede einzelne Kondensatorspannung mit positivem oder negativem Vorzeichen oder gar nicht an der Summe beteiligt ist.

Bekannte Ausführungsvarianten von Gleichspannungswechselrichtern mit erhöhter Anzahl von inneren Gleichspannungsquellen sind die sogenannten *Stacked Multicell Converter* (SMC). Der SMC umfasst pro Phase mehrere Stapel mit mehreren Zellen mit einem Kondensator und dazugehörigen Halbleiterschaltern.

Die Gleichspannungsquellen werden fliegende Kondensatoren genannt. Fliegend heisst, dass das Potential auf welchem sich die Kondensatoren befinden (nicht die Spannung über den Kondensatoren, sondern die Spannung eines Pols der Kondensatoren zum Zwischenkreiskondensator) während dem Betrieb springt.

Für die Qualität der erzeugten Wechselspannung ist es wichtig, dass die einzelnen Kondensatorspannungen nicht allzu stark von ihrem Bemessungswert abweichen. Bei Feststellung einer Abweichung einer oder mehrerer Kondensatorspannungen von ihrem Bemessungswert sind unverzüglich geeignete Massnahmen zu ergreifen, um die Spannungen wieder auf ihren Bemessungswert zu bringen. Dies kann beispielsweise durch eine geeignete Wahl der Schaltzustände der Halbleiterschalter geschehen. Zur Feststellung einer eventuellen Abweichung einer oder mehrerer Kondensatorspannungen werden bei SMC die einzelnen Kondensatorspannungen bestimmt, beispielsweise mit Hilfe von Spannungssensoren gemessen, und die gemessenen Werte der Steuerung des Gleichspannungswechselrichters übergeben.

Die Ansteuerung der Halbleiterschalter erfolgt durch den Vergleich eines Trägersignals mit der Referenzspannung. In jeder Zelle eines SMC wird der äussere Halbleiterschalter eingeschaltet und der innere Halbleiterschalter ausgeschaltet, wenn die Referenzspannung grösser ist als das der betrachteten Zelle zugeordnete Trägersignal, oder der äussere Halbleiterschalter ausgeschaltet und der innere Halbleiterschalter eingeschaltet, wenn die Referenzspannung kleiner ist als das der betrachteten Zelle zugeordnete Trägersignal.

Zur Balancierung der Spannungen der Zellkondensatoren wurden Balancierungsnetzwerke vorgeschlagen, welche parallel zur Last an den Ausgang des SMC geschaltet werden. Diese Balancierungsnetzwerke bestehen im Wesentlichen aus einer R-L-C Serieschaltung.

Die Balancierungseigenschaft eines SMC kann durch verschiedene Einflüsse gestört werden. Insbesondere sind dies Harmonische im Laststrom, Verzögerungen der Schaltzeitpunkte der Halbleiterschalter aufgrund von Schaltrestriktionen, transiente oder unstabile Betriebszustände des SMC, Betrieb eines SMC mit optimierten Pulsmustern. Da aber die Ausgangsspannung des SMC durch schlecht balancierte Kondensatorspannungen beeinträchtigt wird, gilt es eine starke Regelung für die Spannungen der Zellkondensatoren zu finden, welche ein Wegdriften aus dem balancierten Zustand verhindern kann,

Bei der Suche nach einer optimalen Balancierung der Spannungen der Zellkondensatoren ergibt sich jedoch noch eine Reihe von weiteren Problemen.

Beispielsweise wird bei jeder Umschaltung von einem Schaltzustand zu einem anderen Schaltzustand des SMC eine bestimmte Anzahl Halbleiterschalter geöffnet und die gleiche Anzahl Halbleiterschalter geschlossen. Beim Balancieren sollte somit darauf geachtet werden, dass die mittlere Schaltfrequenz der Halbleiter möglicht tief gehalten werden kann.

Wird ein SMC durch einen Diodengleichrichter am Netz betrieben, so kann sich die Zwischenkreisspannung aufgrund von Netzspannungsschwankungen relativ schnell ändern. Da die Spannungen der Zellkondensatoren im balancierten Zustand proportional zur Zwischenkreisspannung sind, d.h. die Spannungen werden von Zelle 1 bis zur Zelle mit dem Zwischenkreiskondensator in gleichmässigen Schritten immer grösser, (u_{C1} = 1/3 u_{Cd}, und u_{C2} = 2/3 u_{Cd}), ist der SMC nach einer solchen Änderung der Zwischenkreisspannung schlecht balanciert. Da die natürliche Balancierungseigenschaft des SMC relativ schwach ist, dauert es einige Zeit, bis sich ein schlecht balancierter SMC wieder im Gleichgewicht befindet. Eine optimale Balancierung würde die Spannungen der Zellkondensatoren möglichst rasch in den Balancierten Zustand zurückbringen, da wie bereits erwähnt, die Ausgangsspannung des SMC durch die schlecht balancierte Kondensatorspannungen gestört wird.

Aus dem Stand der Technik sind verschiedene Modulationsverfahren für SMC bekannt. "SMC : STACKED MULTICELL CONVERTER - A new topology dedicated to High Power / High Voltage applications", L. DELMAS, et al., PCIM 2001, offenbart die Verwendung eines Trägers pro Zelle, wobei die Amplitude jedes Trägers gleich dem halben Referenzbereich / (Anzahl Zellen pro Phase) ist und die Träger übereinander angeordnet und in Phase sind. Der oberste Träger wird zur Erzeugung der Schaltsignale für die Zelle mit der grössten Spannung verwendet, der Träger welcher sich am nächsten bei der Nuillinie befindet, wird zur Erzeugung der Schaltsignale für die Zelle mit der kleinsten Spannung verwendet. Dies führt zu einem optimalen Verlauf der Ausgangsspannung bezüglich der Spannungsharmonischen, da zur Erzeugung einer Referenzspannung immer nur die beiden Spannungsniveaus benutzt werden, welche der Referenz am nächsten liegen. Nachteilig wirkt sich bei diesem Verfahren jedoch aus, dass der Strom in den Zellkondensatoren sein Vorzeichen während einer Periode der Ausgangsspannung nur zweimal ändert. Dies erfordert relativ grosse Zellkondensatoren.

Eine weitere Möglichkeit besteht gemäss derselben Publikation in der Verwendung eines Trägers pro Zelle, wobei die Amplitude jedes Trägers gleich dem halben Referenzbereich ist und die Träger eine Phasenverschiebung von jeweils 360°/(Anzahl Zellen pro Phase) aufweisen. Der Vorteil dieses Verfahrens gegenüber dem erstgenannten ist, dass der Strom in den Zellkondensatoren sein Vorzeichen nun mit der Frequenz der Träger ändert, womit relativ kleine Zellkondensatoren verwendet werden können. Dafür werden zur Erzeugung einer Referenzspannung im Allgemeinen drei Spannungsniveaus benutzt werden, was wiederum bezüglich der Spannungsharmonischen nicht optimal ist.

Ein weiteres Verfahren wurde in "Stacked Multicell Converter (SMC) : topology and control ", L. DELMAS, et al, European Power Electronics Journal, Vol. 12, N°2 Mai 2002 vorgeschlagen, welches sowohl zu einem optimalen Verlauf der Ausgangsspannung als auch zu einer kleinen Baugrösse der Zellkondensatoren führt. Ein Nachteil dieses Verfahrens ist die hohe Komplexität.

In keinem der genannten Verfahren werden die Spannungen der einzelnen Zellkondensatoren aktive balanciert.

### Kurze Darstellung der Erfindung

Die der vorliegenden Erfindung zugrunde liegende Aufgabe besteht darin, ein Verfahren zur Modulation eines Gleichspannungswechselrichters mit mehreren Zellen mit jeweils mindestens einem Zellenkondensator zu schaffen, mit welchem eine fortwährende Balancierung der Spannungen der Zellenkondensatoren gewährleistet ist.

Erfindungsgemäss wird die Aufgabe mit einen Verfahren mit drei Verfahrensschritten gelöst.

In einem ersten Verfahrensschritt wird das zu erzeugende Ausgangsspannungsniveau ermittelt. Mit einer der Anzahl Zellen entsprechenden Anzahl Trägersignale, welche gleichmässig über den Referenzbereich verteilt sind und in Phase verlaufen, wird die Anzahl zuzuschaltender Kondensatoren ermittelt.

In einem zweiten Schritt, wird aus dem ermittelten Ausgangsspannungsniveau mit Hilfe einer Schaltzustandstabelle aus den verschiedenen, redundanten Schaltzuständen derjenige ausgewählt, welcher die Spannungen der Zellkondensatoren in die richtige Richtung am günstigsten beeinflusst, also in der Regel die bestehende Abweichung der Spannungen der Zellkondensatoren verkleinert.

Und im dritten Schritt des erfindungsgemässen Verfahrens wird der gewählte Schaltzustand durch Zu- und Abschalten der betroffenen Halbleiterschalter realisiert.

Auf diese Weise können die Spannungen der Zellkondensatoren fortwährend korrigiert werden und es ergibt sich eine optimierte Balancierung der einzelnen Spannungen. Jede erfasste Abweichung wird mit dem nächsten Schaltvorgang korrigiert, und zwar solange, bis die entsprechende Abweichung kleiner geworden ist als eine andere Abweichung.

Um gleichzeitig eine optimale Stabilität und Steuerbarkeit der Spannungen der Zellkondensatoren zu erreichen und die mittlere Schaltfrequenz der Halbleiter möglichst tief zu halten, ist es vorteilhaft, die Wahl des neuen Schaltzustands so zu wählen, dass pro Phase möglichst nur ein Halbleiterschalter ein und ein Halbleiterschalter ausgeschaltet werden muss.

Das erfindungsgemässe Verfahren ermöglicht eine Regelung für die Spannungen der Zellkondensatoren. Ein Wegdriften aus dem balancierten Zustand wird aktiv verhindert, so dass die Ausgangsspannung des Gleichspannungswechselrichters nicht fortwährend durch schlecht balancierte Kondensatorspannungen negativ beeinflusst wird.

### Kurze Beschreibung der Zeichnungen

Nachfolgend wird das erfindungsgemässe Verfahren anhand von Figuren genauer erläutert. Hierbei zeigt
- Fig. 1: eine Phase eines Stacked Multicell Converter (SMC) mit drei Zellen und zwei Stacks, und
- Fig. 2: das Trägersignal-Referenzspannungsdiagramm zur Ermittlung des Ausgangsspannungsniveaus für den dreizelligen SMC nach Fig. 1.

### Weg zur Ausführung der Erfindung

Das erfindungsgemässe Verfahren, welches auf verschieden Arten von Gleichspannungswechselrichter angewendet werden kann, wird anschliessend beispielhaft anhand von einem Stacked Multicell Converter (SMC) erläutert. Natürlich gelten die Ausführungen jedoch auch für alle anderen Arten von Gleichspannungswechselrichter, welche mehrere Zellen mit jeweils mindestens einem Zellkondensator umfassen.

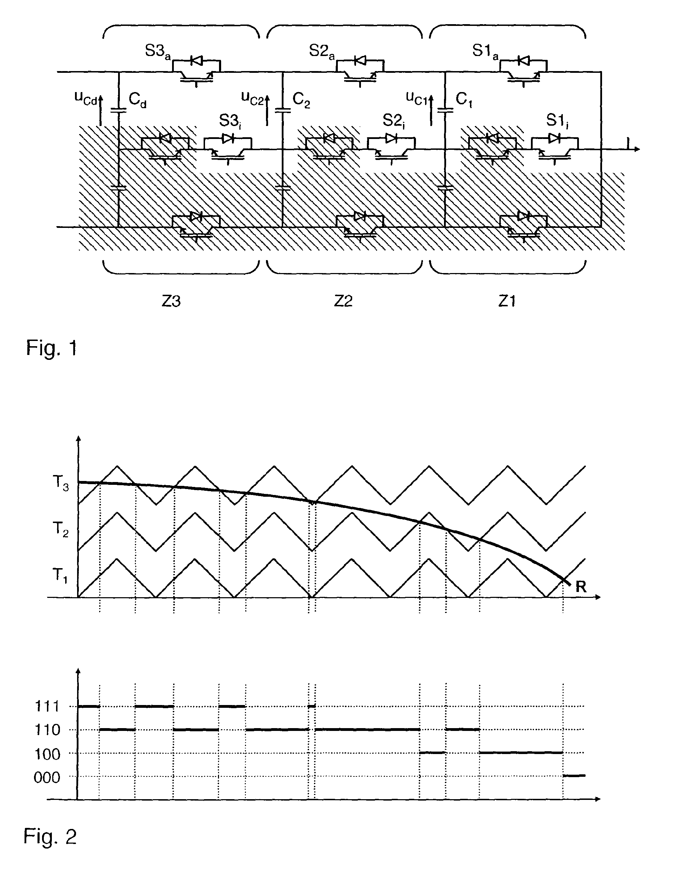

Jede Zelle eines Multilevel Converters (MC) umfasst als Gleichspannungsquelle mindestens einen Kondensator sowie mehrere zu- und abschaltbare Halbleiterschalter. Beim Stacked Multilevel Converter (SMC) weist jede Zelle der Anzahl Stacks entsprechend viele, in Serie geschaltete Kondensatoren auf. In dem zur Erläuterung der Erfindung verwendeten, in Fig. 1 dargestellten Beispiel sind bei zwei Stacks pro Zelle zwei Kondensatoren vorhanden. Jeder Kondensator weist ein zugeordnetes Paar Halbleiterschalter auf.

In der Folge wird bei der Beschreibung des SMC und der Modulation nur auf die positive Hälfte einer Phase eingegangen. Aufbau und Modulation der negativen Hälfte, welche in den Figuren schattiert dargestellt ist, erfolgen analog nach dem gleichen Prinzip.

Die erfindungsgemässe Ansteuerung der Halbleiterschalter des SMC erfolgt in drei Schritten.

Im ersten Schritt des erfindungsgemässen Verfahrens wird das zu erzeugende Ausgangsspannungsniveau bestimmt.

Dies erfolgt beispielsweise durch Vergleichen eines Referenzwerts mit mindestens einem Trägersignal. Die Anzahl der Trägersignale ist dabei gleich der Anzahl der Zellen pro Phase. Im dargestellten Beispiel sind dies bei drei Zellen drei Trägersignale pro Hälfte der Phase.

In Fig. 2 sind im oberen Teil des Diagramms beispielhaft die drei Trägersignale T₁, T₂ und T₃ abgebildet. Die Amplituden der einzelnen Trägersignale entsprechen gleichmässig abgestuft der Teilung des gesamten Spannungsreferenzbereichs durch die Anzahl Trägersignale. Bildlich betrachtet sind die drei Trägersignale übereinander angeordnet und verlaufen in Phase.

Die Trägersignale sind jedoch nicht direkt der einen oder anderen Zelle zugeordnet. Die Trägersignale dienen lediglich der Bestimmung des zu erzeugenden Spannungsniveaus. Die Trägersignale werden mit dem Referenzsignal verglichen und je nachdem wie gross das Referenzsignal bezüglich der drei Trägersignale ist, ergibt sich das zu erzeugende Spannungsniveau. Der dargestellte SMC ermöglicht das Ausgeben von sieben Spannungsniveaus, drei positive, drei negative, sowie Null.

Im unteren Teil der Fig. 2 sind die positiven sowie das Null Spannungsniveau übereinander aufgeführt. Je nach Verlauf des Referenzsignals und der Trägersignale im oberen Diagramm ergeben sich die entsprechenden, auszugebenden Spannungsniveaus.

"000" steht für das Null-Spannungsniveau, d.h. es wird keine Kondensatorspannung an der Ausgangsspannung beteiligt. Dieses Spannungsniveau soll ausgegeben werden, wenn das Referenzsignal kleiner ist als alle drei Trägersignale.

"100" steht für eine Kondensatorspannung aus einer beliebigen Zelle, welche an der Bildung der Ausgangsspannung beteiligt wird. Ein solches Spannungsniveau soll ausgegeben werden, wenn die Referenz grösser ist als genau ein Trägersignal.

"110" steht für zwei, und "111" schliesslich für drei Kondensatorspannungen, welche an der Bildung der Ausgangsspannung beteiligt werden. Diese Spannungsniveaus sollen ausgegeben werden, wenn die Referenz grösser als genau zwei Trägersignale, bzw. grösser als alle drei Trägersignale ist.

Wenn im Verlauf der Zeit die Referenzspannung eines der Trägersignale unter- bzw. überschreitet, kommt es zu einer Änderung des auszugebenden Spannungsniveaus und in der Folge zu einer Änderung des Schaltzustands der Halbleiter des SMC.

Erfordert die Anwendung des erfindungsgemässen Verfahrens eine direkte Steuerung des Spannungsniveaus, beispielsweise in der Anwendung mit Direct Torque Control (DTC) einer elektrischen Maschine, so kann das Spannungsniveau auch direkt von einem externen Steuergerät oder Software Modul vorgegeben werden.

Im zweiten Schritt des erfindungsgemässen Verfahrens werden anhand des ermittelten Ausgangsspannungsniveaus und ausgehend vom momentanen Schaltzustand der Halbleiter die nächsten Schaltvorgänge festgelegt.

Zur Erzeugung einer bestimmten Ausgangsspannung basierend auf den drei Kondensatorenspannungen stehen in der Regel mehrere redundante Schaltzustände zur Auswahl. Erfindungsgemäss wird im zweiten Schritt des Modulationsverfahrens mit Hilfe einer Schaltzustandstabelle aus den Redundanten Schaltzuständen derjenige ausgesucht, welcher die vom balancierten Richtwert abweichenden Spannungen der Zellkondensatoren in die richtige Richtung beeinflusst.

Damit aus der Schaltzustandstabelle der richtige Schaltzustand ausgewählt werden kann, muss natürlich die Information über den aktuellen Ladungszustand der einzelnen Kondensatoren vorliegen. Für den in Fig. 1 abgebildeten 7-Niveau SMC umfasst die für die Wahl des nächsten Schaltzustandes relevante, gemessene und berechnete Information die folgenden Werte:

| | |
|---|---|
| u_{cd} | Spannung des Zwischenkreiskondensators C_{d} |
| u_{c1} | Spannung des Zellkondensators C₁ |
| u_{c2} | Spannung des Zellkondensators C₂ |
| I | Phasenstrom |
| du_{c1 =} u_{c1} - ⅓ · u_{cd} | Abweichung von u_{c1} von der Sollspannung (⅓ · u_{cd}) |
| du_{c2 =} u_{c2} - ²/₃ · u_{cd} | Abweichung von u_{c2} von der Sollspannung (²/₃ · u_{cd}) |

Aus diesen Werten werden die folgenden Signale k₁, k₂ und k₃ errechnet, welche gemäss einem vordefinierten Schlüssel über die Wahl des nächsten Schaltzustandes entscheiden.

| | |
|---|---|
| K₁ = du_{c1} · I > 0 | k₁ = {0,1} |
| k₂ = du_{c2} · I >0 | k₂ = {0,1} |
| k₃ = \|du_{c2}\| > \|du_{c1}\| | k₃ = {0,1} |

Mit Hilfe des ermittelten Spannungsniveaus, der gemessenen und berechneten zusätzlichen Signale sowie des ebenfalls bekannten, momentan aktiven Schaltzustandes wird anhand einer vom Aufbau des SMC abhängigen Zuordnungstabelle der neue Schaltzustand ermittelt, welcher anschliessend im dritten Schritt des erfindungsgemässen Verfahrens durch Zu- und Abschalten der betroffenen Halbleiterschalter realisiert wird.

Eine beispielhafte Schaltzustandstabelle ist in der folgenden Tabelle dargestellt.

In der linken Spalte ist jeweils das auszugebende Spannungsniveau aufgeführt. Die Spalte des aktiven Schaltzustandes ist in drei Subspalten unterteilt, je eine für die drei Zellen C1, C2 und C3 des SMC. Die Felder enthalten die Werte 1 und 0. Ist das Feld 1, so ist in der entsprechenden Zelle der äussere Halbleiterschalter geschlossen und der innere Halbleiterschalter geöffnet, ist das Feld 0, so ist in der entsprechenden Zelle der äussere Halbleiterschalter geöffnet und der innere Halbleiterschalter geschlossen. Dieselbe Unterteilung gilt auch für den neuen Schaltzustand, rechts aussen. Auch hier gilt: ist das Feld 1, so wird in der entsprechenden Zelle der äussere Halbleiterschalter geschlossen und der innere Halbleiterschalter geöffnet, ist das Feld 0, so wird in der entsprechenden Zelle der äussere Halbleiterschalter geöffnet und der innere Halbleiterschalter geschlossen. Dazwischen ist die Spalte mit der Schaltsignallogik angeordnet. Die drei Signale k₁, k₂ und k₃ sind dabei jeweils in einer einzelnen Subspalte gelistet.

Pro Zeile ist jeweils eine Schaltsignalkonstellation pro auszugebendes Spannungsniveau und aktivem Schaltzustand sowie der in diesem Fall auszuführende neuen Schaltzustand angegeben.

Die Schaltsignale können gemäss Definition die Werte 0 und 1 annehmen, 0 wenn die entsprechende Ungleichung nicht erfüllt ist und 1 wenn die entsprechende Ungleichung erfüllt ist. In gewissen Konstellationen von auszugebendem Spannungsniveau, aktivem Schaltzustand kann es sein, dass das eine oder andere Signal k1, k2 oder k3 ohne Auswirkung auf den neuen Schaltzustand bleibt. In diesem Fall steht in der Tabelle in dem entsprechenden Signalfeld ein x anstatt einer 1 oder einer 0.

Ist also beispielsweise ausgehend vom aktiven Schaltzustand 1 / 0 / 1 das Spannungsniveau von "110" auf "100" zu senken, stehen gemäss der Tabelle insgesamt sechs neue Schaltzustände zur Auswahl, welche alle durch Zu- und Abschalten von jeweils genau einem Halbleiter umgesetzt werden können. Andere Schaltzustände, beispielsweise 0 / 1 / 0, sind in der Tabelle gar nicht aufgeführt, da der Schaltaufwand und damit die Verluste zu gross wären. Von den sechs aufgeführten Schaltzuständen zur Erzeugung des gewünschten Spannungsniveaus wird nun aufgrund der gemessenen Spannungen und Ströme sowie der berechneten Signale der passende Schaltzustand ermittelt. Ist also beispielsweise du_{c2}·I grösser als 0 (k₁=1), du_{c1}·I nicht grösser als 0 (k₂=0) und |du_{c2}| grösser als |du_{c1}| (k₃=1) so wird der neue Schaltzustand 1 / 0 / 0 gewählt.

Sind hingegen im genannten Beispiel sowohl du_{c2}·I als auch du_{c1}·I kleiner als 0 (k₁=0, k₂=0), spielt es keine Rolle ob |du_{c2}| oder |du_{c1}| grösser ist (k₃=x), es wird so oder so der neue Schaltzustand 0 / 0 / 1 umgesetzt.

| Auszugebendes Spannungsniveau | aktiver Schaltzustand | | | Schaltsignallogik | | | neuer Schaltzustand | | |
|---|---|---|---|---|---|---|---|---|---|
| | C1 | C2 | C3 | du_{c2}·I > 0 | du_{c1}·I > 0 | \|du_{c2}\| > \|du_{c1}\| | C1 | C2 | C3 |
| kein Spannungsniveauwechsel | | | | | | | | | |
| 000 | x | x | x | x | x | x | 0 | 0 | 0 |
| Spannungsniveauwechsel von {000} zu {100} | | | | | | | | | |
| 100 | 0 | 0 | 0 | 0 | 0 | x | 0 | 0 | 1 |
| | | | | 0 | 1 | 0 | 1 | 0 | 0 |
| | | | | 0 | 1 | 1 | 0 | 0 | 1 |
| | | | | 1 | 0 | x | 0 | 1 | 0 |
| | | | | 1 | 1 | x | 1 | 0 | 0 |
| | kein Spannungsniveauwechsel | | | | | | | | |
| | 0 | 0 | 1 | x | x | x | 0 | 0 | 1 |
| | 0 | 1 | 0 | x | x | x | 0 | 1 | 0 |
| | 1 | 0 | 0 | x | x | x | 1 | 0 | 0 |
| | Spannungsniveauwechsel von {110} zu {100} | | | | | | | | |
| | 0 | 1 | 1 | 0 | x | x | 0 | 0 | 1 |
| | | | | 1 | x | x | 0 | 1 | 0 |
| | 1 | 0 | 1 | 0 | 0 | x | 0 | 0 | 1 |
| | | | | 0 | 1 | 0 | 1 | 0 | 0 |
| | | | | 0 | 1 | 1 | 0 | 0 | 1 |
| | | | | 1 | 0 | 0 | 0 | 0 | 1 |
| | | | | 1 | 0 | 1 | 1 | 0 | 0 |
| | | | | 1 | 1 | x | 1 | 0 | 0 |
| | 1 | 1 | 0 | x | 0 | x | 0 | 1 | 0 |
| | | | | x | 1 | x | 1 | 0 | 0 |
| | Spannungsniveauwechsel von {111} zu {100} | | | | | | | | |
| | 1 | 1 | 1 | 0 | 0 | x | | 0 | 1 |
| | | | | 0 | 1 | 0 | 1 | 0 | 0 |
| | | | | 0 | 1 | 1 | 0 | 0 | 1 |
| | | | | 1 | 0 | x | 0 | 1 | 0 |
| | | | | 1 | 1 | x | 1 | 0 | 0 |
| Spannungsniveauwechsel von {000} zu {110} | | | | | | | | | |
| 110 | 0 | 0 | 0 | 0 | 0 | x | 0 | 1 | 1 |
| | | | | 0 | 1 | x | 1 | 0 | 1 |
| | | | | 1 | 0 | 0 | 0 | 1 | 1 |
| | | | | 1 | 0 | 1 | 1 | 1 | 0 |
| | | | | 1 | 1 | x | 1 | 1 | 0 |
| | Spannungsniveauwechsel von {100} zu {110} | | | | | | | | |
| | 0 | 0 | 1 | x | 1 | x | 1 | 0 | 1 |
| | | | | x | 0 | x | 0 | 1 | 1 |
| | 0 | 1 | 0 | 0 | 0 | x | 0 | 1 | 1 |
| | | | | 0 | 1 | 0 | 1 | 1 | 0 |
| | | | | 0 | 1 | 1 | 0 | 1 | 1 |
| | | | | 1 | 0 | 0 | 0 | 1 | 1 |
| | | | | 1 | 0 | 1 | 1 | 1 | 0 |
| | | | | 1 | 1 | x | 1 | 1 | 0 |
| | 1 | 0 | 0 | 0 | x | x | 1 | 0 | 1 |
| | | | | 1 | x | x | 1 | 1 | 0 |
| | kein Spannungsniveauwechsel | | | | | | | | |
| | 0 | 1 | 1 | x | x | x | 0 | 1 | 1 |
| | 1 | 0 | 1 | x | x | x | 1 | 0 | 1 |
| | 1 | 1 | 0 | x | x | x | 1 | 1 | 0 |
| | Spannungsniveauwechsel von {111} zu {110} | | | | | | | | |
| | 1 | 1 | 1 | 0 | 0 | x | 0 | 1 | 1 |
| | | | | 0 | 1 | x | 1 | 0 | 1 |
| | | | | 1 | 0 | 0 | 0 | 1 | 1 |
| | | | | 1 | 0 | 1 | 1 | 1 | 0 |
| | | | | 1 | 1 | x | 1 | 1 | 0 |
| | kein Spannungsniveauwechsel | | | | | | | | |
| 111 | x | x | x | x | x | x | 1 | 1 | 1 |

Wie bereits erwähnt sind in der Schaltzustandstabelle abgesehen von den Spannungsniveausprüngen von "111" zu "100" und von "000" zu "110" jeweils nur die neuen Schaltzustände aufgelistet, welche aus dem gerade aktiven Schaltzustand mit nur einer einzigen Schalthandlung erreicht werden können. Es brauch also jeweils nur ein Halbleiterschalter geöffnet und ein Halbleiterschalter geschlossen zu werden. Dies garantiert eine minimale Schaltfrequenz der Halbleiterschalter.

### Bezugszeichenliste

- C_{d}: Zwischenkreiskondensator
- C₁, C₂: Kondensatoren der Zellen
- U_{cd}, U_{c1}, U_{c2}: Spannung über den Kondensatoren
- I: Phasenstrom
- S1ₐ, S2ₐ, S3ₐ: Äussere Halbleiterschalter
- S1ᵢ, S2ᵢ, S3ᵢ: Innere Halbleiterschalter
- Z1, Z2, Z3: Zellen
- T₁, T₂, T₃: Trägersignale
- R: Referenzsignal

## Patentansprüche

1. Verfahren zur Modulation einer Phase eines Gleichspannungswechselrichters mit mehreren Zellen (Z1, Z2, Z3) mit jeweils mindestens einem Zellenkondensator (C₁, C₂, C_{d}), bei welchem Verfahren
in einem ersten Schritt das vom Gleichspannungswechselrichter zu erzeugende Ausgangsspannungsniveau bestimmt wird,
in einem zweiten Schritt aus denjenigen Schaltzuständen der Halbleiterschalter, mit welchen das zuvor bestimmte Ausgangsspannungsniveau erzeugt werden kann, derjenige neue Schaltzustand ausgewählt wird, welcher die Spannungen (u_{c1}, u_{c2}) der Zellkondensatoren derart beeinflusst, dass sich eine bestehende Abweichung dieser Spannungen von einem Referenzwert verkleinert, und
in einem dritten Schritt der neue Schaltzustand durch Ein- und Ausschalten ausgewählter Halbleiterschalter realisiert wird.

2. Verfahren nach Anspruch 1, **dadurch gekennzeichnet, dass** im zweiten Schritt der neue Schaltzustand ausgehend vom zuletzt aktiven Schaltzustand abhängig von Signalen (k₁, k₂, k₃), welche aus gemessenen Spannungen (u_{cd}, u_{c1}, u_{c2}) und/ oder Strömen (I) erstellt werden, festgelegt wird.

3. Verfahren nach Anspruch 2, **dadurch gekennzeichnet, dass** für jedes Spannungsniveau jeweils einem aktiven Schaltzustand und einer bestimmten *Signalkonstellation* zumindest ein neuer Schaltzustand zugeordnet ist.

4. Verfahren nach Anspruch 1, **dadurch gekennzeichnet, dass** im zweiten Schritt aus mehreren möglichen derjenige neue Schaltzustand ausgewählt wird, welcher aus dem gerade aktiven Schaltzustand erreicht werden kann, indem nur ein Halbleiterschalter geöffnet und nur ein Halbleiterschalter geschlossen wird.

5. Verfahren nach Anspruch 1, **dadurch gekennzeichnet, dass** der erste Schritt laufend wiederholt wird, und dass der zweite Schritt dann ausgeführt wird, wenn sich das bestimmte zu erzeugende Ausgangsspannungsniveau seit der letzten Wiederholung geändert hat.

6. Verfahren nach Anspruch 4, **dadurch gekennzeichnet, dass** der zweite Schritt im Anschluss an jeden ersten Schritt ausgeführt wird, und dass der dritte Schritt ausgeführt wird, wenn sich ein gegenüber der letzten Wiederholung neuer Schaltzustand ergeben hat.

7. Verfahren nach Anspruch 1, **dadurch gekennzeichnet, dass** im ersten Schritt das zu erzeugende Ausgangsspannungsniveau mit Hilfe von einer der Anzahl Zellen des Gleichspannungswechselrichter entsprechenden Anzahl Trägersignalen und einer Referenzspannung bestimmt wird.
